# FASCICULE DE BREVET EUROPEEN

(11) **EP 3 481 668 B1**
(45) Date de publication et mention de la délivrance du brevet: **27.01.2021**
(21) Numéro de dépôt: 17732954.7
(22) Date de dépôt: 29.06.2017
(51) Int. Cl.: B60N 2/28

(54) **NACELLE POUR ENFANT PRÉSENTANT UNE ARMATURE ET UNE ENVELOPPE DE REMPLISSAGE**
KINDERBETT MIT EINEM RAHMEN UND EINER AUSKLEIDUNG
CRADLE FOR A CHILD HAVING A FRAME AND A CLADDING

(30) Priorité: 07.07.2016 FR 1656561
(43) Date de publication de la demande: 15.05.2019
(73) Titulaire: Dorel France, 49309 Cholet Cedex (FR)
(72) Inventeur: PORMENTE, Sylvaine, 49610 Juigne Sur Loire (FR); PASQUIER, Nicolas, 49700 Doue La Fontaine (FR)
(74) Mandataire: Vidon Brevets & Stratégie
(86) Numéro de dépôt international: PCT/EP2017/066211
(87) Numéro de publication internationale: WO 2018/007243

(56) Documents cités:
- EP-A1- 2 857 258
- FR-A1- 2 736 609

## Description

### 1. Domaine de l'invention

Le domaine de l'invention est celui de la puériculture, et plus précisément du transport des enfants en bas âge ou des nourrissons. Plus précisément encore, l'invention concerne les nacelles, ou couffins, permettant le transport en position allongée des enfants entre 0 et 6 mois environ (soit d'une taille d'environ entre 40 et 70 cm).

Plus particulièrement, l'invention concerne les nacelles de transport pour enfant destinées à être mises en œuvre dans un véhicule, parfois appelées « nacelles de sécurité ».

### 2. L'art antérieur

On connaît dans l'art antérieur des nacelles destinées à être placées dans des véhicules automobiles et permettant le transport d'enfants de la naissance à 10 kg environ. Ces nacelles permettent de transporter confortablement, dans un véhicule automobile, l'enfant en position allongée, notamment afin de préserver la qualité de son sommeil, de lui offrir une plus grande liberté de mouvement que dans un siège auto, et de lui offrir la position la plus adaptée à son dos fragile.

De telles nacelles sont connues, par exemple du document FR 2 736 609. Elles présentent généralement une coque rigide, portant à l'intérieur une garniture au fond de laquelle est placé un matelas, sur lequel l'enfant peut reposer.

Des moyens de solidarisation réversibles à un châssis de voiture d'enfant, ou à un autre moyen de support, par exemple une poussette, peuvent être prévus. Il peut notamment s'agir de moyens mis en œuvre par le demandeur, et connus sous la marque Moduloclip®.

Lorsqu'elles sont utilisées dans un véhicule, ces nacelles doivent être convenablement arrimées dans le véhicule pour éviter que la nacelle ne bascule, en cas d'accident, de choc ou de coup de frein brusque, ou ne soit projetée dans l'habitacle du véhicule.

Ces nacelles comprennent donc des éléments de solidarisation au châssis du véhicule. Cette solidarisation peut notamment être assurée à l'aide de ceintures de sécurité du véhicule, ou par l'intermédiaire des pinces Isofix® (sur la nacelle ou sur une embase apte à la recevoir), comme décrit par exemple (non pas pour une nacelle, mais pour un siège auto) dans le document EP 2 857 258.

Ces nacelles de l'art antérieur comprennent classiquement une coque, le plus souvent en matière plastique rigide, qui peut recevoir sur ses parois internes un matériau amortissant du type mousse ou polystyrène, puis être habillée de tissu.

Cette structure connue implique un poids relativement important, ce qui rend peu aisé le transport de l'enfant dans la nacelle, ainsi que son installation dans le véhicule (et son retrait). De plus, cette structure présente une absorption des chocs relativement faible, qui peut s'avérer insuffisante pour garantir une sécurité suffisante de l'enfant en cas de chocs/d'accidents, en particulier au vu de la nouvelle règlementation.

Par conséquent, il existe un besoin de fournir une nacelle de transport d'un enfant, destinée notamment à être fixée dans un véhicule automobile, qui ne présente pas au moins certains des différents inconvénients de l'art antérieur. En particulier, il existe un besoin d'une telle nacelle qui permette d'assurer une sécurité améliorée de l'enfant transporté pour un poids réduit.

### 3. Caractéristiques essentielles de l'invention

Ces objectifs, ainsi que d'autres qui apparaîtront par la suite, sont atteints selon l'invention à l'aide d'une nacelle pour le transport d'un enfant en position allongée, destinée à être fixée à un siège d'un véhicule automobile.

Selon l'invention, ladite nacelle comprend :
- une armature comprenant une pluralité de montants s'étendant depuis un fond et reliés à leur extrémité supérieure par des traverses, délimitant ainsi plusieurs ouvertures ; et
- une enveloppe interne disposée à l'intérieur de ladite armature, formant les parois intérieures de ladite nacelle et présentant des protubérances venant au moins partiellement remplir au moins une desdites ouvertures de ladite armature.

Ainsi, l'invention repose sur une approche nouvelle et inventive de la conception de nacelles pour le transport des enfants en voiture, en s'affranchissant de la présence d'une coque intégrale, à laquelle elle substitue un ensemble constitué d'une armature rigide ajourée, formée d'un ensemble de montants et destinée à limiter les déformations de la nacelle en cas de choc, et d'une enveloppe interne, plus souple, destinée à assurer le maintien, la sécurité et le confort de l'enfant, et/ou l'esthétique de la nacelle.

L'armature de la nacelle est ajourée et permet de réduire le poids de la nacelle. Elle présente une rigidité élevée afin de limiter les risques de déformations en cas de choc. Une telle structure permet donc d'atteindre un compromis optimal entre le poids de la nacelle et sa rigidité.

L'enveloppe interne, fabriquée dans un matériau présentant un fort degré/coefficient d'absorption des chocs, est rapportée et insérée (depuis l'intérieur de la nacelle) dans l'armature afin de combler/remplir, complètement ou partiellement, les ouvertures de l'armature et permet donc de garantir un maintien et/ou une sécurité élevée pour l'enfant. Cette enveloppe interne permet en outre de fournir un confort optimal à l'enfant. Elle peut aussi avoir une fonction esthétique puisqu'en comblant les ouvertures de l'armature, elle peut permettre à la nacelle de présenter une surface extérieure lisse et homogène, si les épaisseurs sont adaptées en conséquence, sur laquelle il suffit d'ajouter une simple peau en tissu ou en plastique léger.

Selon un mode de réalisation, l'armature présente, sur chaque surface latérale, un montant vertical, dit pointeau, à l'extrémité supérieure duquel est montée une poignée.

Selon un mode de réalisation, le pointeau est placé sur la surface latérale sensiblement au niveau où se situe la tête de l'enfant.

Selon un mode de réalisation, l'armature comprend au moins un montant incliné par rapport à l'horizontale, dit arbalétrier, dont l'extrémité supérieure rejoint l'extrémité supérieure du pointeau.

Selon un mode de réalisation, au moins l'un des arbalétriers se prolonge jusqu'à la partie inférieure de l'armature.

Selon un mode de réalisation, l'enveloppe interne est monobloc et présente au moins une fente d'installation dans sa paroi périphérique.

Ainsi, une telle enveloppe monobloc permet un maintien de la forme de l'enveloppe dans le temps. La fente ménagée dans la paroi périphérique permet de faciliter l'insertion et le montage de l'enveloppe interne dans l'armature, puisque lors de cette étape, la fente verticale permet une légère déformation de l'enveloppe.

Selon un autre mode de réalisation, l'enveloppe interne est formée de deux blocs distincts, facilitant ainsi le montage de l'enveloppe dans l'armature.

Selon un mode de réalisation, l'enveloppe interne est fabriquée en polymère thermoplastique expansé, en polypropylène expansé, ou en polystyrène expansé.

De telles matières permettent de fournir un fort coefficient d'absorption à l'enveloppe interne afin de garantir une sécurité optimale de l'enfant transporté. En outre, ces matières permettent d'obtenir un compromis optimal entre l'absorption et le poids de l'enveloppe.

Selon un autre aspect de l'invention, l'enveloppe interne peut comprendre une pluralité de rainures destinées respectivement à recevoir chacune un des montants et/ou une des traverses de l'armature.

Le terme « rainure » doit s'interpréter ici de façon large, et désigne des zones en creux (non nécessairement de largeur et/ou de profondeur constantes), dans lesquels un montant peut s'inscrire.

Dans ce cas, l'enveloppe interne peut comprendre, entre ces rainures, des protubérances (portions présentant une épaisseur supérieure à celles des rainures) remplissant chacune une des ouvertures de l'armature.

La mise en œuvre de rainures et de protubérances permet à l'enveloppe de parfaitement coopérer avec les montants de l'armature de façon que la surface extérieure de la nacelle présente un aspect lisse et sans élément en saillie. Ainsi, cette surface extérieure lisse de la nacelle peut offrir une esthétique améliorée à la nacelle et un confort optimal pour le porteur lors du transport de l'enfant.

Ceci permet également, le cas échéant, de rapporter simplement et efficacement une couche, ou peau, de couverture, améliorant encore l'esthétique et le rendu.

Selon un autre aspect particulier, la nacelle présente un premier jeu d'installation entre les protubérances et les ouvertures et/ou un deuxième jeu d'installation entre les rainures et les montants et/ou les traverses.

Ainsi, l'insertion de l'enveloppe interne dans la nacelle peut être facilitée.

Selon un mode de réalisation, l'armature porte des moyens de solidarisation permettant de fixer la nacelle à une embase montée sur le siège d'un véhicule automobile.

Selon un autre aspect particulier, l'armature porte des pinces de solidarisation permettant de fixer la nacelle à des boucles d'accrochage prévues à cet effet sur le siège d'un véhicule automobile.

Ainsi, l'armature de la nacelle présente des moyens de solidarisation de la nacelle au siège d'un véhicule automobile par le biais d'une embase fixée au siège, ou directement au siège.

Selon un autre mode de réalisation, l'enveloppe interne s'étend au-dessus du rebord supérieur de l'armature. Cet aspect permet de fournir une meilleure protection de l'enfant transporté.

Selon un mode de réalisation, l'armature comprend au moins deux ouvertures, destinées à limiter le poids de la nacelle.

Selon un autre mode de réalisation, l'enveloppe interne comprend un nombre de protubérances correspondant au nombre d'ouvertures ménagées dans l'armature, de façon à garantir l'assemblage de l'enveloppe interne dans l'armature.

Selon un mode de réalisation, l'armature porte des moyens de solidarisation permettant de fixer la nacelle à une embase solidaire du siège d'un véhicule automobile.

Selon un autre mode de réalisation, l'armature porte des pinces de solidarisation permettant de fixer la nacelle à des boucles d'accrochage prévues à cet effet sur le siège d'un véhicule automobile.

Ainsi, il est possible de solidariser la nacelle directement au siège du véhicule ou bien par le biais d'une embase, elle-même fixée au siège du véhicule.

Selon un mode de réalisation, l'enveloppe interne s'étend au-dessus des traverses, formant rebord supérieur de l'armature.

Ainsi, l'enfant est protégé de manière optimale puisque cette portion de l'enveloppe s'étend au-dessus du rebord supérieur de l'armature afin de fournir une protection accrue de l'enfant, et principalement de sa tête, en cas de choc.

Selon un mode de réalisation particulier, la nacelle comprend des moyens d'absorption d'une partie de l'énergie appliquée à un harnais de retenue de l'enfant en cas de choc.

L'invention concerne également un système pour le transport d'un enfant en position allongée, comprenant une embase solidaire d'un véhicule automobile et une nacelle telle que décrite ci-avant, destinée à être fixée par des moyens de solidarisation à l'embase. L'ensemble des caractéristiques décrites précédemment en relation avec la nacelle s'appliquent bien sûr également, seules ou en combinaison, à un tel système selon l'invention.

### 4. Liste des figures

D'autres caractéristiques et avantages de l'invention apparaîtront plus clairement à la lecture de la description suivante de plusieurs modes de réalisation particuliers, donnés à titre de simples exemples illustratifs et non limitatifs, et des dessins annexés parmi lesquels :
- la figure 1 est une vue en perspective de la nacelle selon un premier mode de réalisation de l'invention ;
- la figure 2 est une vue éclatée en perspective montrant l'armature et l'enveloppe interne de la nacelle de la figure 1 ;
- la figure 3 est une vue de côté montrant l'enveloppe interne de la nacelle de la figure 1 ;
- la figure 4 est une vue de côté montrant l'armature de la nacelle de la figure 1 ;
- la figure 5 est une vue en perspective de l'arrière de la nacelle de la figure 1 ;
- la figure 6 est une vue de côté en perspective représentant la nacelle de la figure 1 dans laquelle l'enveloppe interne est partiellement représentée ;
- la figure 7 est une vue de dessus en perspective représentant la nacelle de la figure 1 dans laquelle l'enveloppe interne est partiellement représentée ;
- la figure 8 est une vue éclatée en perspective montrant les différents éléments formant la nacelle selon un deuxième mode de réalisation de l'invention ;
- la figure 9 est une autre vue éclatée en perspective de la nacelle de la figure 8 ;
- la figure 10 représente un mode de réalisation des moyens de dissipation d'énergie du harnais avant un choc ;
- la figure 11 représente les moyens de dissipation d'énergie du harnais de la figure 10 à la suite d'un choc.

### 5. Description détaillée de deux modes de réalisation de l'invention

### 5.0 Aspects généraux

L'invention propose donc une nacelle de transport d'un enfant en position allongée, notamment dans un véhicule. Pour ce faire, la nacelle peut être fixée sur une embase solidaire d'un siège du véhicule. Il est également possible de fixer la nacelle directement à un siège d'un véhicule par le biais de pinces Isofix®.

### 5.0.1 Structure de la nacelle

Le principe général de l'invention repose, selon un premier aspect, sur une structure particulière de nacelle qui comprend une armature présentant des ouvertures, assurant la fonction de retenue de l'enfant. Ainsi l'armature n'est pas pleine, mais formée d'un ensemble d'éléments, appelés montants et/ou traverses, définissant des ouvertures.

Cette armature ajourée est apte à recevoir une enveloppe interne destinée notamment à combler ces ouvertures et former :
- à l'intérieur, une surface intérieure permettant d'assurer la sécurité de l'enfant par sa construction en matériau absorbant l'énergie en cas de choc, d'assurer le confort de l'enfant et/ou d'améliorer l'esthétique de la nacelle ; et
- à l'extérieur, une surface extérieure qui peut être essentiellement lisse, lorsque l'épaisseur des parties de l'enveloppe interne pénétrant dans les ouvertures est adaptée pour affleurer avec les montants du châssis.

L'enveloppe interne peut donc présenter des rainures, ou plus généralement des formes en creux, correspondant sensiblement aux montants, pour que ceux-ci viennent s'inscrire dans les rainures ou formes en creux. Le cas échéant, un jeu peut être prévu, pour faciliter l'assemblage.

Selon les modes de réalisation, il n'est pas obligatoire que l'armature définisse un cadre supérieur. Au contraire, comme on le verra par la suite dans les exemples, il peut être intéressant que l'armature présente des montants supérieurs sensiblement plus bas que la partie supérieure de la nacelle. Dans ce cas, c'est une partie de l'enveloppe intérieure qui occupe et définit la partie supérieure de la nacelle.

Il est possible de recouvrir l'intérieur de la nacelle (c'est-à-dire la partie tournée vers l'intérieur de l'enveloppe de tissu ou d'un revêtement de finition adaptée. De la même façon, l'extérieur peut être recouvert d'un tissu, d'une peau ou d'un habillage, pour donner à la nacelle un aspect esthétique souhaité.

### 5.0.2 Armature ajourée

Selon un deuxième aspect de l'invention, qui peut le cas échéant être mis en œuvre indépendamment du premier, l'armature est donc formée d'un ensemble de montants assemblés pour limiter les déformations de la nacelle et garantir une absorption optimale en cas de choc (lors d'une utilisation dans un véhicule), en prenant notamment en compte, le cas échéant, le déport d'une partie de la nacelle, par rapport à l'embase sur laquelle elle est fixée. Cette structure ajourée particulière de la nacelle permet de garantir une sécurité optimale de l'enfant tout en présentant un poids minimal.

Notamment, un montant vertical large 120c peut être prévu, de chaque côté de la nacelle, face à l'emplacement de la tête de l'enfant. Ceci permet de sécuriser en particulier cette partie du corps de l'enfant. Il peut présenter une forme sensiblement trapézoïdale, la partie inférieure étant plus large que la partie supérieure.

Ce montant vertical, appelé pointeau par analogie avec l'élément vertical d'une charpente, est associé à un montant incliné (voir le deuxième mode de réalisation) ou deux montants inclinés (voir le premier mode de réalisation) par rapport à l'horizontale, appelés arbalétriers, toujours par analogie au domaine de la charpente.

Le pointeau n'est pas placé au milieu du côté de la nacelle, mais décalé vers la bord le plus proche de la tête (il se trouve sensiblement à 1/3 de la longueur de la nacelle). Il porte en son extrémité supérieure une portion de réception de la poignée de portage de la nacelle, qui se trouve donc sensiblement à la verticale de la tête de l'enfant transporté.

Les extrémités supérieures du pointeau et de l'arbalétrier ou des arbalétriers se rejoignent donc au niveau ou au voisinage de cette portion de réception de la poignée.

L'arbalétrier (dans le cas du deuxième mode de réalisation) ou l'un des arbalétriers (dans le cas du premier mode de réalisation) se prolongent vers le bas, jusqu'à la partie inférieure de l'armature, tout en s'élargissant et en se redressant sensiblement verticalement à leur extrémité inférieure.

Les montants ou traverses formant le cadre supérieur de l'armature s'étendent sensiblement au-dessous de la portion de réception de la poignée.

### 5.0.3 Modes de réalisation, variantes et adaptations

On décrit ci-après deux modes de réalisation, donnés à titre d'exemples. Il est clair que les caractéristiques décrites pour l'un des modes de réalisation (formes, matériaux, dimensions, options,...) ne sont pas spécifiques à l'un des modes de réalisation, mais peuvent être interverties, combinées et/ou adaptées selon les besoins, sans sortir du cadre de l'invention.

### 5.1 Premier mode de réalisation de l'invention

### 5.1.1 Armature

La nacelle N est donc constituée d'une armature, ou cadre structurel, ou châssis, 1 dans lequel est montée une enveloppe interne, ou peau, 2 absorbante. L'armature 1 est fabriquée en un matériau rigide comme le Stamax® (polypropylène renforcé avec de la fibre de verre) ou le PA GF30 (polyamide renforcé avec de la fibre de verre), par exemple. Cette armature 1 est notamment destinée à garantir la rigidité de la nacelle N de façon à limiter les déformations de cette dernière en cas de choc, notamment. L'armature 1 comprend une paroi de fond 11 et une paroi latérale 12.

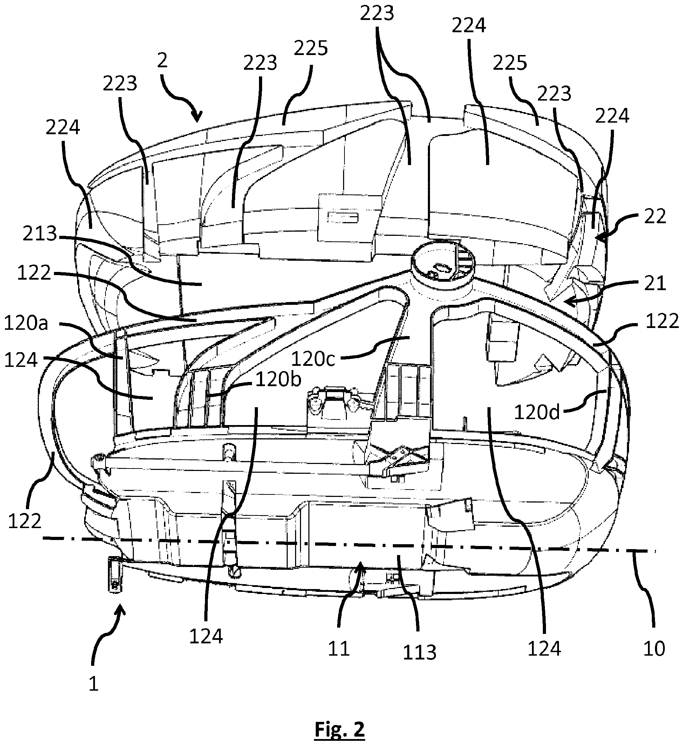

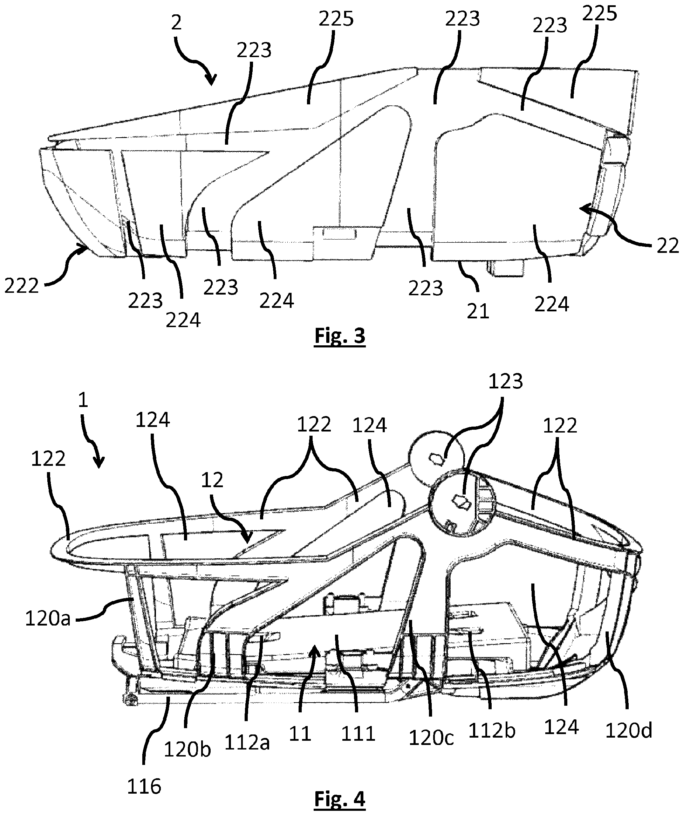

Comme illustrée sur les figures 2 et 4, la paroi de fond 11, destinée à supporter l'enfant, est de forme sensiblement oblongue. La paroi de fond 11 est ici pleine, c'est-à-dire que ses surfaces supérieure 111 (la surface qui reçoit l'enfant) et inférieure 113 (la surface qui est en appui sur l'embase ou le siège du véhicule) sont homogènes et ne présentent pas d'ouverture/lumière. L'épaisseur de la paroi de fond est choisie de façon à fournir une rigidité optimale à la nacelle.

La surface supérieure 111 de la paroi de fond 11, c'est-à-dire la surface orientée vers le haut et qui est destinée à recevoir l'enfant, présente trois lumières 112 permettant le passage des sangles du harnais de sécurité de l'enfant (non représenté). Ces lumières 112 formées dans la paroi de fond 11 sont configurées pour permettre le passage des sangles du harnais de sécurité maintenant l'enfant dans la nacelle. Plus précisément, ces lumières 112 permettent le passage d'une extrémité du harnais destinée à être solidement fixée à l'armature 1 de la nacelle N.

Préférentiellement, une première ouverture 112a se situe sensiblement au niveau de l'entrejambe de l'enfant lorsque ce dernier est supporté par la paroi de fond 11. Les deux autres ouvertures 112b se situent sensiblement au niveau des épaules de l'enfant lorsque ce dernier est supporté par la paroi de fond 11, respectivement de chaque côté de la tête de ce dernier.

La lumière 112a est destinée à permettre la fixation de la sangle d'entrejambe du harnais de sécurité de l'enfant tandis que les lumières 112b sont destinées à permettre la fixation des sangles d'épaules du harnais de sécurité de l'enfant.

La surface inférieure 113 présente des moyens de solidarisation 116 qui, dans le mode de réalisation illustré, permettent la fixation de la nacelle N à une embase (non représentée) solidaire du siège d'un véhicule. Ces moyens de solidarisation 116 se présentent par exemple sous la forme d'une paire de tubes, ou barres, de fixation qui s'étendent parallèlement à l'axe longitudinal de la paroi de fond 11.

Ces barres 116 de fixation s'étendent chacune le long des côtés rectilignes de la paroi de fond 11 dans la moitié arrière de cette dernière, c'est-à-dire la partie de la paroi de fond 11 accueillant les membres inférieurs de l'enfant lorsque ce dernier est dans la nacelle N. De tels moyens de solidarisation sont connus et ne seront donc pas décrits plus en détail ici.

Dans un autre mode de réalisation (non illustré), il est envisageable de fixer la nacelle directement au siège du véhicule par le biais d'une paire de pinces Isofix®. Ces pinces Isofix® seraient alors solidaires du châssis, et s'étendraient perpendiculairement à l'axe longitudinal de la paroi de fond 11. La mise en œuvre de tels moyens est connue et ne sera donc pas décrite plus en détail ici.

La paroi de fond 11 est prolongée, sur l'ensemble de sa périphérie, par une paroi latérale 12 qui s'étend sensiblement perpendiculairement à la paroi de fond 11. Le terme « paroi » se comprend ici comme « surface », mais ne désigne pas un élément plein, puisque l'armature est, selon l'invention, ajourée.

Cette paroi latérale 12 est ainsi formée de montants 120 courbes qui s'étendent à partir de la paroi de fond 11, vers les bords supérieurs de la nacelle N. Ainsi, cette paroi latérale n'est pas pleine, mais ajourée de manière à limiter le poids de l'armature 1. Les montants 120 présentent une section en forme de « U » qui optimise leur rigidité. Ils sont disposés symétriquement par rapport à un axe de symétrie 10 confondue avec l'axe longitudinal de la paroi de fond 11.

Dans ce mode de réalisation, la paroi latérale 12 met en œuvre huit montants 120, c'est-à-dire quatre montants disposés symétriquement de chaque côté de l'axe de symétrie 10.

Comme illustré sur la figure 4, la paroi latérale 12 présente une première paire de montants 120a située au voisinage de l'extrémité arrière de la paroi de fond 11 (à proximité de l'extrémité de la nacelle N portant les pieds de l'enfant). Ces montants 120a s'étendent de manière rectiligne vers le bord supérieur de la nacelle N.

Une deuxième paire de montants 120b se situe sensiblement au milieu de la moitié arrière de la paroi de fond 11 (la moitié de la nacelle portant les membres inférieurs de l'enfant). Ces deuxièmes montants 120b s'étendent vers le bord supérieur de la nacelle N selon une courbe dirigée vers la moitié avant de la nacelle N (la moitié de la nacelle portant les membres supérieurs de l'enfant).

Une troisième paire de montants 120c se situe sensiblement au niveau du milieu de la longueur de la paroi de fond 11. Ces troisièmes montants 120c s'étendent de manière rectiligne vers le bord supérieur de la nacelle N.

Une quatrième paire de montants 120d se situe à l'extrémité avant de la paroi de fond 11 (dans la portion de paroi de fond 11 située au-dessus de la tête de l'enfant). Ces quatrièmes montants 120d s'étendent de manière rectiligne vers le bord supérieur de la nacelle N.

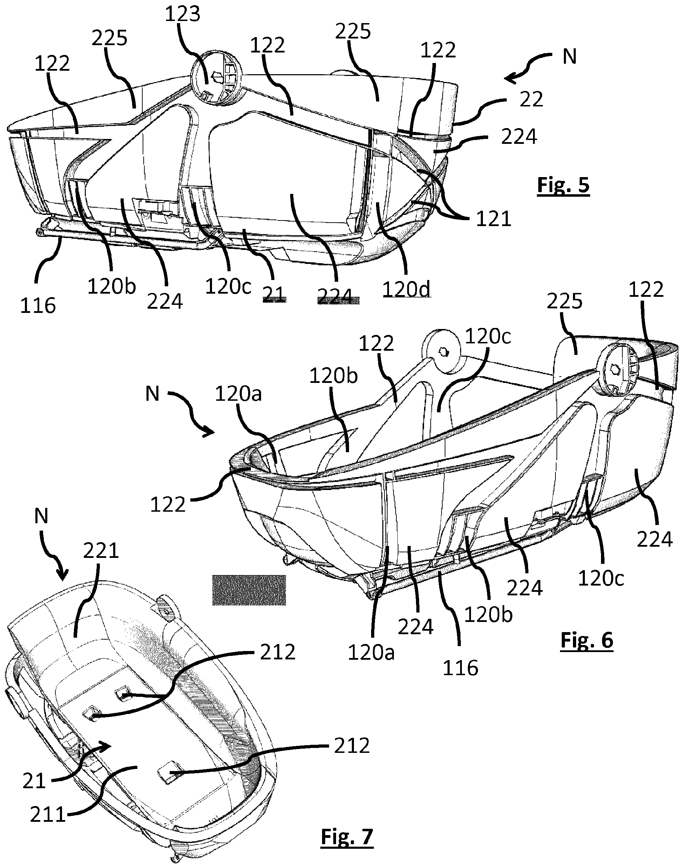

Une paire de croisillons 121 oblique relie les extrémités des quatrièmes montants 120b entre elles de façon à améliorer encore la rigidité et la résistance aux déformations de l'armature 1. Comme illustré sur la figure 5, ces croisillons 121 obliques relient les extrémités des quatrièmes montants 120d en se croisant en leur milieu.

Dans une variante, il est envisageable de mettre en œuvre plus de huit montants 120, ou un nombre plus réduit, par exemple deux ou trois.

Il est souhaitable de choisir le nombre de montants 120 pour obtenir le meilleur compromis entre la rigidité de la structure et le poids de la nacelle N.

Une pluralité de traverses, ou barres, 122 relie l'extrémité de chaque montant 120 de manière à former le rebord supérieur 125 de la paroi latérale 12 (on notera que, par abus de langage, dans les revendications, tous les éléments constitutifs de l'armature, qu'ils s'agissent de montants verticaux, de traverses, de croisillons ou autres, sont appelés « montants »).

Les traverses 122 présentent une forme adaptée pour épouser les hauteurs différentes des montants 120. Les traverses 122 présentent une section sensiblement en « U » qui permet de garantir une rigidité élevée de la paroi latérale 12 pour un poids optimal.

La paroi latérale 12 de l'armature 1 présente donc une pluralité d'ouvertures, ou évidements, 124 ménagées entre les montants 120, les traverses 122 et la paroi de fond 11.

La configuration particulière de l'armature 1 permet de garantir à la nacelle N une rigidité et une résistance aux déformations importantes. Plus particulièrement, cette armature permet d'obtenir, lors d'un choc, une déformation maîtrisée et acceptable.

La structure de l'armature 1 présentant une paroi latérale 12 ajourée contribue à sensiblement diminuer son poids.

L'intersection entre les traverses 122 et les troisièmes montants, ou pointeaux, 120c présente à leur extrémité supérieure des moyens de fixation 123 aptes à fixer une poignée de transport (non représentée) de la nacelle N. De tels moyens de fixation, qui peuvent permettent un mouvement de rotation de la poignée ou maintenir celle-ci de façon rigide sont connus et ne sont donc pas décrits plus en détail ici.

La figure 4 montre que le rebord supérieur 125 de la paroi 12 ne s'étend pas dans un même plan. Au contraire, il présente un profil dissymétrique par rapport à un plan vertical reliant les moyens de fixation 123.

Le rebord 125 est dissymétrique en ce sens que la portion avant de la nacelle présente une hauteur plus élevée par rapport à la paroi de fond 111 de la nacelle que la portion arrière.

De plus, les traverses 122 du rebord 125 s'étendent obliquement avec des angles d'inclinaison différents. Plus précisément, les traverses, appelées aussi arbalétriers, 122 situées dans la portion avant de la nacelle N présentent un angle d'inclinaison plus important (entre 20 et 50° par rapport à un plan horizontal) que les traverses 122 situées dans la portion arrière (entre 10 et 20° par rapport à ce même plan horizontal).

La largeur et la robustesse des montants 120b et 120c, conjuguées à la hauteur plus élevée du rebord 125 au niveau de la portion avant de la nacelle N, permettent d'améliorer la protection de la tête de l'enfant en cas de choc.

Une nacelle présentant une telle dissymétrie du rebord supérieur 125 s'éloigne des nacelles connues de l'art antérieur dans la mesure où ces dernières présentent généralement un rebord supérieur rectiligne horizontal ou légèrement incliné.

### 5.1.2 Enveloppe interne

La nacelle N comprend, en outre, une enveloppe interne, ou peau, 2 fabriquée dans un matériau plus léger que l'armature 1. Cette enveloppe interne 2 a pour fonction de garantir la sécurité et la retenue de l'enfant, tout en assurant le confort et une certaine esthétique à la nacelle.

Pour ce faire, l'enveloppe interne 2 est fabriquée en un matériau léger présentant un fort degré/coefficient d'absorption des chocs. L'enveloppe interne 2 est, par exemple, fabriquée en polymère thermoplastique expansé, tels que le polypropylène expansé (PPE) ou le polystyrène expansé (PSE) Piocelan (« marque déposée »). Un tel matériau permet d'optimiser le poids de la nacelle N tout en garantissant une sécurité optimale de l'enfant transporté, et en particulier une absorption efficace des chocs.

Comme illustré sur les figures 2 et 3, l'enveloppe interne 2 est, dans ce mode de réalisation, une enveloppe monobloc et comprend une paroi de fond 21 prolongée par une paroi périphérique 22 s'étendant sensiblement perpendiculairement à la paroi de fond 21. L'enveloppe interne 2 est destinée à être montée/insérée dans l'armature 1, depuis l'intérieur de la nacelle, et présente donc une forme complémentaire de celle de l'armature 1 et des dimensions adaptées.

Comme illustré sur la figure 7, la paroi de fond 21 de l'enveloppe interne 2 présente une surface supérieure 211 (la surface supportant l'enfant) lisse et homogène de façon à assurer un confort et un maintien optimal de l'enfant transporté. Elle comprend trois lumières 212 configurées pour coopérer avec les ouvertures 112 de la paroi de fond 11 de l'armature 1, de façon à permettre le passage des sangles du harnais de sécurité de l'enfant.

La surface inférieure 213 de la paroi de fond 21 (la surface orientée vers le siège du véhicule) présente un profil/section adapté au profil/section de la surface supérieure de la paroi de fond 11 de l'armature 1. Cette correspondance des profils des surfaces des parois de fond 11 et 21 permet une parfaite superposition et un montage/assemblage optimal de l'enveloppe interne 2 sur l'armature 1, de façon à empêcher tout mouvement de l'enveloppe interne 2 par rapport à l'armature 1, en cas de choc notamment.

La paroi périphérique 22, qui s'étend sur l'ensemble de la périphérie de la paroi de fond 21, présente, dans ce mode de réalisation, une hauteur différente entre les moitiés avant et arrière de la nacelle N. En effet, dans la moitié avant de la nacelle N (la moitié portant les membres supérieurs de l'enfant), la hauteur de la paroi périphérique 22 est constante et se situe sensiblement au même niveau que l'intersection entre les traverses 122 et les troisièmes montants 120c.

Dans la moitié arrière de la nacelle (la moitié portant les membres inférieurs de l'enfant), la hauteur de la paroi périphérique 22 est décroissante depuis l'intersection entre les traverses 122 et les troisièmes montants 120c jusqu'aux traverses 122 situées au voisinage de l'extrémité arrière de la nacelle N.

Ainsi, l'enveloppe 2 s'étend partiellement au dessus de l'armature 1, et plus précisément au moins en partie au-dessus du rebord supérieur de cette armature, par l'intermédiaire des éléments 225 qui permettent de mieux envelopper l'enfant afin de lui fournir un confort optimal et une protection améliorée en cas de choc.

Le fait que le rebord supérieur de l'armature ne corresponde pas à la partie supérieure de la nacelle, mais soit placé sensiblement plus bas, permet d'optimiser la rigidité de l'ensemble, et de réduire les dimensions des ouvertures.

La surface intérieure 221 de la paroi périphérique 22 est lisse et homogène de façon à assurer un confort et un maintien optimal à l'enfant transporté.

La surface extérieure 222 de la paroi périphérique 22 comprend une pluralité de rainures 223 de formes correspondantes aux montants 120 et aux traverses 122. Ainsi, la surface extérieure 222 présente des protubérances, ou éléments en saillie, 224 entre les rainures 223. Ces protubérances 224 s'étendent perpendiculairement à la surface extérieure 222 et sont de forme correspondante aux ouvertures 124 de la paroi latérale 12 de l'armature 1.

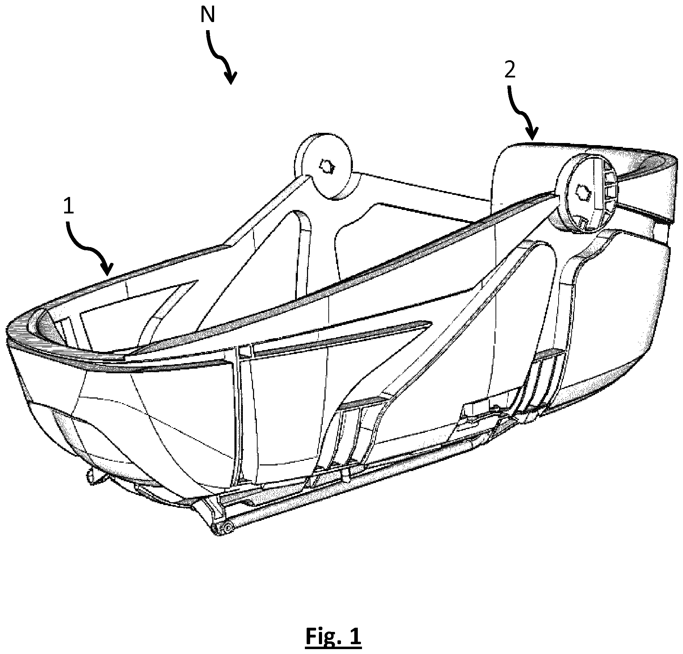

Comme illustré sur les figures 1 et 5 à 7, lorsque l'enveloppe interne 2 est insérée dans l'armature 1 :
- les montants 120 et les traverses 122 de l'armature 1 sont parfaitement logés dans les rainures 223 de l'enveloppe interne 2, et
- les protubérances 224 de l'enveloppe interne 2 viennent parfaitement combler/remplir les ouvertures 124 de la paroi latérale 12 de l'armature 1.

Un jeu de montage peut être prévu entre les protubérances 224 et les ouvertures 124 et/ou entre les rainures 223 et les montants 120/traverses 122 de façon à faciliter l'insertion et le montage de l'enveloppe interne 2 dans l'armature 1. Ce jeu peut être prévu dans une direction longitudinale de la nacelle, c'est-à-dire qu'un espace est laissé libre entre les bords de protubérances 224 et les bords des ouvertures 124, et/ou entre les bords des rainures 223 et les montants 120/traverses 122.

Alternativement, ou en complément, un jeu peut être prévu dans une direction transversale de la nacelle, c'est-à-dire que la hauteur des protubérances 224 est légèrement inférieure à l'épaisseur des montants 120 et des traverses 122 formant les ouvertures 124, et/ou la profondeur des rainures 223 est légèrement supérieure à l'épaisseur des montants 120 et des traverses 122.

Préférentiellement, les rainures 223 et les protubérances 224 sont dimensionnées de façon que, lorsque l'enveloppe interne 2 est insérée dans l'armature 1, la surface extérieure de la nacelle N soit lisse et homogène, en ce sens qu'il n'existe pas de protubérance ou d'élément faisant saillie et que la transition entre l'armature et l'enveloppe s'effectue dans un même plan (de façon affleurante).

La surface extérieure lisse de la nacelle offre une esthétique améliorée à la nacelle et un confort optimal pour le porteur lors du transport de l'enfant. En effet, la surface extérieure étant totalement lisse et ne présentant pas d'élément en saillie, les risques de blessure ou d'accrochage indésirable pour le porteur sont minimisés.

Selon l'invention, la nacelle N comprend ainsi une armature 1 présentant des ouvertures de façon à optimiser le poids de la nacelle et sa rigidité. Une enveloppe interne 2, fabriquée en matériau absorbant l'énergie, est destinée à être insérée dans cette armature 1 de façon à combler les ouvertures ménagées dans ce dernier. La rigidité de l'armature et l'absorption fournie par l'enveloppe interne permettent d'assurer la sécurité de l'enfant transporté en limitant les déformations de la nacelle et en absorbant les chocs en cas d'accidents. Une telle structure de nacelle permet aussi de procurer une esthétique améliorée à la nacelle.

### 5.2 Deuxième mode de réalisation de l'invention

Dans ce deuxième mode de réalisation, il est à noter que tous les éléments portant les mêmes références numériques que pour le premier mode de réalisation ne sont pas décrits de nouveau en détail. Seuls les éléments constituant la nacelle N qui sont différents du premier mode de réalisation seront donc décrits ci-dessous.

### 5.2.1 Armature

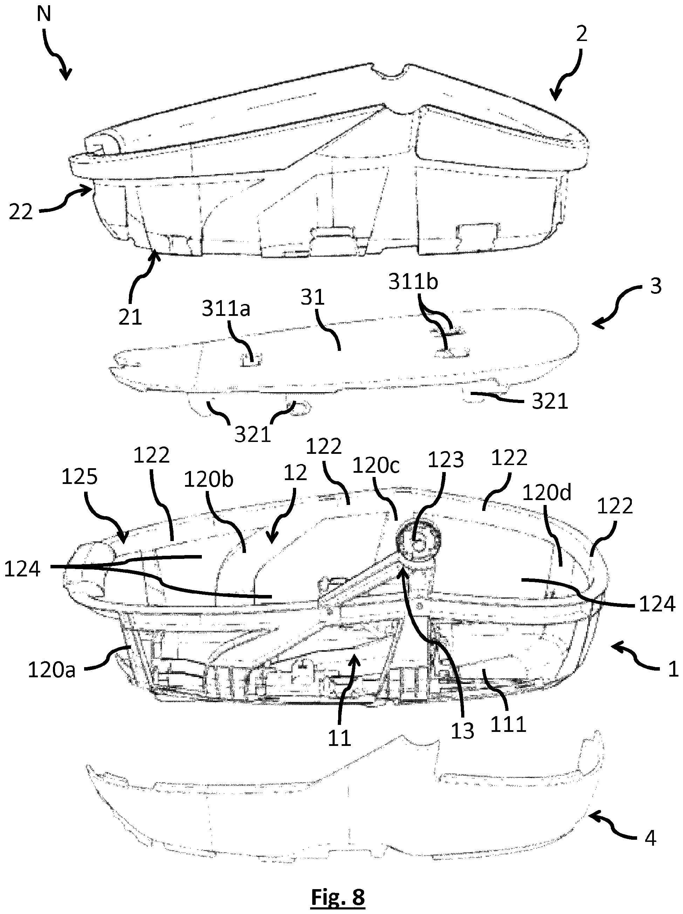

De façon similaire au premier mode de réalisation, la nacelle N du deuxième mode de réalisation (illustré sur la figure 8) est constituée d'une armature 1 dans laquelle est montée une enveloppe interne 2 absorbante.

Cette armature 1, destinée à garantir la rigidité de la nacelle N de façon à limiter les déformations de cette dernière en cas de choc, comprend une paroi de fond 11 et une paroi latérale 12. A nouveau, le terme « paroi » se comprend ici comme « surface », mais ne désigne pas forcément un élément plein, puisque l'armature est, selon l'invention, ajourée.

La paroi de fond 11 est, dans ce mode de réalisation, destinée à recevoir une pièce intermédiaire 3 entre l'armature 1 et l'enveloppe interne 2. La pièce intermédiaire 3 est de forme sensiblement correspondante à la paroi de fond 11 et présente des moyens de fixation (non représentés) permettant de la solidariser à la surface supérieure 111 de la paroi de fond 11. De préférence, la pièce intermédiaire 3 est clippée à cette surface supérieure 111. Dans une variante, il est envisagé de simplement poser la pièce intermédiaire 3 sur la surface supérieure 111 de la paroi de fond 11.

La pièce intermédiaire 3 est fabriquée en matériau souple, adapté pour le confort de l'enfant, et peut présenter une surface supérieure 31 lisse. Cette surface supérieure 31 comprend trois lumières 311 configurées pour permettre le passage des sangles du harnais de sécurité qui maintiennent l'enfant dans la nacelle. Plus précisément, ces lumières 311 permettent le passage d'une extrémité du harnais destinée à être solidement fixée à l'armature 1 de la nacelle N.

Préférentiellement, une première ouverture 311a se situe sensiblement au niveau de l'entrejambe de l'enfant lorsque ce dernier est supporté dans la nacelle N. Les deux autres ouvertures 311b se situent sensiblement au niveau des épaules de l'enfant lorsque ce dernier est supporté dans la nacelle N, respectivement de chaque côté de la tête de ce dernier.

La lumière 311a est destinée à permettre la fixation de la sangle d'entrejambe du harnais de sécurité de l'enfant tandis que les lumières 311b sont destinées à permettre la fixation des sangles d'épaules du harnais de sécurité de l'enfant.

La surface inférieure (non visible) de la pièce intermédiaire 3 est destinée à reposer sur la surface supérieure 111 de la paroi de fond 11. Cette surface inférieure présente une pluralité de pieds 321 s'étendant perpendiculairement au plan de la surface inférieure de la pièce intermédiaire 3, et vers le bas. Ces pieds 321 permettent de solidariser cette pièce et le cas échéant de fournir une légère inclinaison de cette pièce intermédiaire 3 par rapport à la surface supérieure 111 de l'armature 1 afin que l'enfant transporté soit dans une position confortable.

Ces pieds 312 permettent également d'empêcher les déplacements latéraux et transversaux la pièce intermédiaire 3 par rapport à paroi de fond 11.

Dans ce deuxième mode de réalisation, les moyens de solidarisation référencés 116 dans le premier mode de réalisation et situés sur la surface inférieure 112 (non visible) de la paroi de fond 11, ne sont pas illustrés. Ces moyens de solidarisation 116 de la nacelle N à l'embase ou au siège du véhicule sont identiques à ceux décrits plus haut dans le premier mode de réalisation.

Comme dans le premier mode de réalisation, la paroi de fond 11 est prolongée, sur l'ensemble de sa périphérie, par une paroi latérale 12 qui s'étend sensiblement perpendiculairement à la paroi de fond 11.

Cette paroi latérale 12 est formée de montants courbes 120 qui s'étendent à partir de la paroi de fond 11, vers les bords supérieurs de la nacelle N. Ainsi, cette paroi latérale n'est pas pleine, mais ajourée de manière à limiter le poids de l'armature 1. Les montants 120 présentent une section en forme de « U » qui optimise leur rigidité. Ils sont disposés symétriquement par rapport à un axe de symétrie confondu avec l'axe longitudinal de la paroi de fond 11.

Dans ce mode de réalisation, la paroi latérale 12 met aussi en œuvre huit montants 120, c'est-à-dire quatre montants disposés symétriquement de chaque côté de l'axe de symétrie.

Comme illustré sur la figure 8, les montants 120 s'étendent essentiellement de la même manière que dans le premier mode de réalisation.

Plus précisément, les montants 120a et 120d situés respectivement au voisinage des extrémités avant et arrière de la paroi de fond 11 s'étendent de manière sensiblement rectiligne vers le bord supérieur de la nacelle N.

Les montants 120b, qui se situent sensiblement au milieu de la moitié arrière de la paroi de fond 11, s'étendent vers le bord supérieur de la nacelle N selon une courbe dirigée vers la moitié avant de la nacelle N.

Les montants 120c, qui se situent sensiblement au niveau du milieu de la longueur de la paroi de fond 11, s'étendent de manière rectiligne vers le bord supérieur de la nacelle N.

Dans ce deuxième mode de réalisation, la paire de croisillons 121 oblique n'est pas mise en œuvre. Toutefois, rien ne s'opposerait à sa mise en œuvre dans une variante de ce mode de réalisation.

Dans une autre variante, il est possible de mettre en œuvre plus de huit montants 120, ou un nombre plus réduit, par exemple deux ou trois. Toutefois, il est préférable de choisir le nombre de montants 120 de sorte à obtenir le meilleur compromis entre la rigidité de la structure et le poids de la nacelle N.

Ici encore, une pluralité de traverses, ou barres, 122 relie l'extrémité supérieure de chaque montant 120 de manière à former le rebord supérieur 125 de la paroi latérale 12. Les traverses 122 présentent une forme adaptée pour épouser les hauteurs différentes des montants 120. Les traverses 122 présentent une section sensiblement en « U » qui permet de garantir une rigidité élevée de la paroi latérale 12 pour un poids optimal.

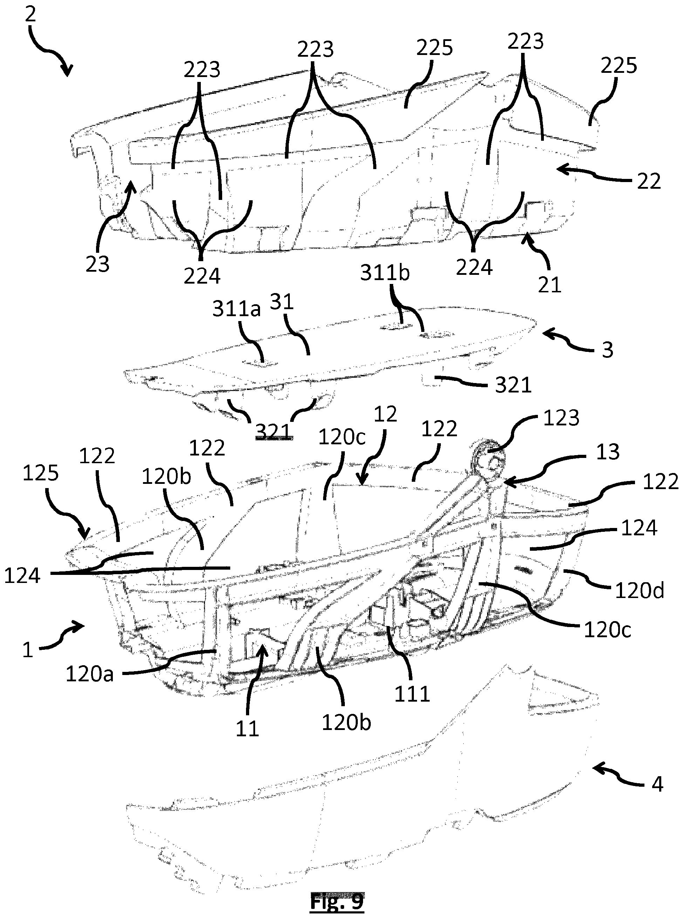

Le rebord 125 se différencie de celui du premier mode de réalisation en ce qu'il s'étend sensiblement de manière horizontale sur l'ensemble de la périphérie de la nacelle N. Les variations de hauteur entre les montants 120 sont ici très faibles, comme illustré sur les figures 8 et 9.

L'armature 1 comprend, en outre, un montant incliné, ou arbalétrier, 13 s'étendant entre le montant vertical, ou pointeau 120c et le rebord 125. L'arbalétrier 13 s'étend au-dessus du rebord 125 selon un angle compris entre 10° et 40° par rapport à un plan horizontale.

Ici, l'ensemble en V définit par l'arbalétrier 13 et la partie supérieure du pointeau portant les moyens de fixation 123 de la poignée de transport (non représentée) de la nacelle N sont amovibles, et/ou fabriqués indépendamment de l'armature elle-même. Dans une variante, l'ensemble en V fait partie intégrante de l'armature 1.

Comme dans le premier mode de réalisation, la paroi latérale 12 de l'armature 1 présente donc une pluralité d'ouvertures, ou évidements, 124 ménagés entre les montants 120, les traverses 122 et la paroi de fond 11. Une telle structure de l'armature 1 dans laquelle la paroi latérale 12 est ajourée contribue à sensiblement diminuer son poids.

La configuration particulière de l'armature 1 permet de garantir à la nacelle N une rigidité et une résistance aux déformations importante. Plus particulièrement, l'armature 1 de l'invention permet de garantir une sécurité optimale de l'enfant puisque cette dernière présente des montants 120b et 120c larges et robustes au niveau de la tête de l'enfant qui permettent ainsi d'obtenir, lors d'un choc, une déformation maîtrisée de la nacelle.

### 5.2.2 Enveloppe interne

Comme dans le premier mode de réalisation, la nacelle N comprend, en outre, une enveloppe interne 2 fabriquée dans un matériau plus léger que l'armature 1 et qui a pour fonction de garantir la sécurité et la retenue de l'enfant, tout en assurant le confort et une certaine esthétique à la nacelle N.

Comme illustré sur les figures 8 et 9, l'enveloppe interne 2 est une enveloppe monobloc et comprend une paroi de fond 21 prolongée par une paroi périphérique 22 s'étendant sensiblement perpendiculairement à la paroi de fond 21. L'enveloppe interne 2 est destinée à être montée/insérée dans l'armature 1, et présente donc une forme correspondant à celle de l'armature 1 et des dimensions adaptées. En variante, l'enveloppe interne peut être réalisée en deux parties, voire plus.

L'enveloppe 2 du deuxième mode de réalisation présente les mêmes caractéristiques et les mêmes avantages que dans le premier mode de réalisation.

Elle diffère du premier mode de réalisation en ce que la forme des rainures 223 et des protubérances 224 est adaptée aux différences de forme de la structure de l'armature 1 du deuxième mode de réalisation décrite ci-dessus.

En outre, comme illustré sur la figure 9, l'enveloppe interne 2 présente une fente 23 qui s'étend perpendiculairement à la paroi de fond 21 dans la paroi périphérique 22. Cette fente 23 permet de faciliter l'insertion et le montage de l'enveloppe interne 2 dans l'armature 1.

La partie de l'enveloppe interne 2 qui s'étend au-dessus du rebord 125 de l'armature 1 présente également des différences. Plus précisément, dans le premier mode de réalisation, la hauteur de la paroi périphérique 22 de l'enveloppe interne 2 s'étend sensiblement horizontalement dans la moitié avant de la nacelle puis décroit dans la moitié arrière de la nacelle depuis l'intersection entre les traverses 122 et les troisièmes montants 120c jusqu'aux traverses 122 situées au voisinage de l'extrémité arrière de la nacelle N.

Dans le deuxième mode de réalisation, la hauteur de la paroi périphérique décroit depuis l'extrémité de l'élément amovible 13 portant les moyens de fixation 123 de la poignée vers chacune des extrémités avant et arrière de la nacelle N.

Comme illustré sur la figure 8, la paroi périphérique 22 de l'enveloppe interne 2 présente une hauteur maximale au niveau des moyens de fixation 123 (lorsque l'enveloppe interne 1 est insérée dans l'armature 1). La hauteur de la paroi périphérique 22 est sensiblement identique à chacune des extrémités avant et arrière de la nacelle N.

### 6. Absorption de l'énergie au niveau du harnais

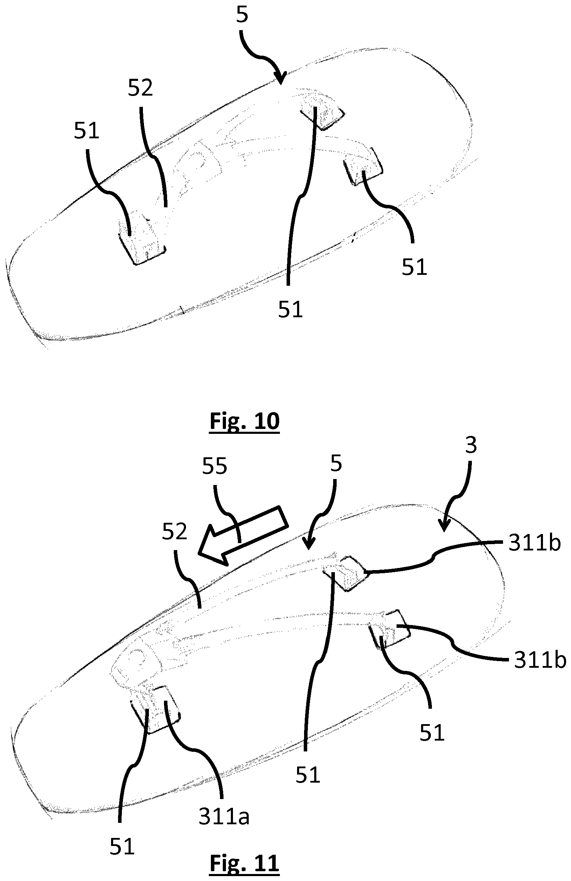

Comme illustré sur les figures 10 et 11, la nacelle N peut présenter également des moyens de dissipation 5 de l'énergie appliquée sur les harnais lors d'un choc. Plus précisément, dans le mode de réalisation illustré, les ouvertures 311a et 311b ménagées dans la pièce intermédiaire 3, présentent chacune un insert 51 déformable lorsque une force supérieure à un seuil prédéterminé (correspondant à un choc ou un déplacement important, par exemple une situation d'accident). Cet insert 51 est destiné, comme illustré sur la figure 11 à se déformer lors d'un choc afin de dissiper l'énergie appliquée sur les harnais et donc sur l'enfant transporté.

Les inserts 51 sont, par exemple, fabriqués en polymère thermoplastique expansé, tels que le polypropylène expansé (PPE) ou le polystyrène expansé (PSE). Toutefois, tout autre matériau permettant une telle dissipation de l'énergie peut être utilisé.

Bien que trois inserts sont mis en œuvre dans ce mode de réalisation, il peut être envisagé de n'en prévoir que deux, au niveau des épaules, ou qu'un, au niveau de l'entrejambe.

Dans l'exemple illustré, les inserts 51 sont situés entre le harnais 52 et le côté inférieur de l'ouverture 311a, 311b, c'est-à-dire le côté le plus proche du bas de la nacelle portant les membre inférieurs de l'enfant. Dans une variante, il est envisageable de placer un insert 51 de chaque côté du harnais 52, c'est-à-dire en-dessous et au-dessus du harnais (non illustré).

La mise en œuvre des moyens de dissipation 5 est ici illustrée avec la pièce intermédiaire 3 du second mode de réalisation de la nacelle N. On comprend que les moyens de dissipation 5 peuvent être mis en œuvre dans les ouvertures 112a et 112b de la paroi de fond 11 de la nacelle N du premier mode de réalisation.

Dans une variante, les inserts peuvent être remplacés par une pièce mobile associée à des moyens de rappel.

Selon une autre variante, il est prévu de ménager une fente dans l'armature, déformable et/ou déplaçable sous l'effet d'une force supérieure à un seuil prédéterminé. Cette fente, destinée à recevoir l'axe de fixation du harnais présente un diamètre inférieur au diamètre de l'axe de fixation du harnais. Lors d'un choc, l'axe du harnais déforme la fente et se déplace dans cette dernière de manière à absorber/dissiper l'énergie du choc. De même, un ou plusieurs éléments de guidage des sangles de harnais, par exemple des tiges, peuvent être montées de façon à se déplacer, et/ou se déformer voire se casser pour absorber l'énergie, et donc réduire les efforts appliquer sur l'enfant.

Il est également possible de prévoir que les fentes ménagées dans la pièce intermédiaire 3 sont elles-mêmes déformables, par exemple déchirables, sous l'effet d'un choc important.

### 7. Autres aspects et variantes

Lorsque l'enveloppe interne est insérée/montée dans l'armature 1 (avec ou sans la pièce intermédiaire 3 selon le mode de réalisation), une peau extérieure 4 (illustrée sur les figures 8 et 9) fabriquée dans un plastique léger est montée sur l'armature afin de fournir une esthétique améliorée à la nacelle N.

Après assemblage/solidarisation de la pièce intermédiaire 3, de l'enveloppe interne 2 dans l'armature 1 et de la peau 4, le poids de la nacelle N est inférieur à 6 kg. Préférentiellement, le poids de la nacelle assemblée est compris entre 4 et 5,5 kg.

Le principe de l'invention, consistant à mettre en œuvre, pour une nacelle de transport d'un enfant, une armature ajourée rigide dans lequel est inséré une enveloppe interne en matériau absorbant qui vient combler/remplir les ouvertures de l'armature, afin de garantir une sécurité optimale de l'enfant tout en présentant un poids minimal, peut être adapté à tout dispositif de transport d'un enfant, tels un siège de sécurité ou une poussette, par exemple.

## Revendications

1. Nacelle (N) pour le transport d'un enfant en position allongée, destinée à être solidarisée au siège d'un véhicule automobile,
**caractérisée en ce que** ladite nacelle (N) comprend:
- une armature (1) comprenant une pluralité de montants (120) s'étendant depuis un fond (11) et reliés à leur extrémité supérieure par des traverses (122), délimitant ainsi plusieurs ouvertures (124) ; et
- une enveloppe interne (2) disposée à l'intérieur de ladite armature (1), formant les parois intérieures de ladite nacelle (N) et présentant des protubérances venant remplir au moins partiellement au moins une desdites ouvertures (124) de ladite armature (1).

2. Nacelle (N) selon la revendication 1, **caractérisée en ce que** ladite armature présente, sur chaque surface latérale, un montant vertical, dit pointeau, à l'extrémité supérieure duquel est montée une poignée.

3. Nacelle selon la revendication 2, **caractérisée en ce que** ledit pointeau est placé sur la surface latérale sensiblement au niveau où se situe la tête de l'enfant.

4. Nacelle selon l'une quelconque des revendications 2 et 3, **caractérisée en ce que** ladite armature comprend au moins un montant incliné par rapport à l'horizontale, dit arbalétrier, dont l'extrémité supérieure rejoint l'extrémité supérieure dudit pointeau.

5. Nacelle selon la revendication 4, **caractérisée en ce qu'**au moins l'un desdits arbalétriers se prolonge jusqu'à la partie inférieure de ladite armature.

6. Nacelle selon l'une quelconque des revendications 1 à 5, **caractérisée en ce que** ladite enveloppe interne (2) est monobloc et présente au moins une fente d'installation (23) dans sa paroi périphérique.

7. Nacelle selon l'une quelconque des revendications 1 à 5, **caractérisée en ce que** ladite enveloppe interne (2) est formée de deux blocs distincts.

8. Nacelle (N) selon la revendication 1 à 7, **caractérisée en ce que** ladite enveloppe interne (2) est fabriquée en polymère thermoplastique expansé, en polypropylène expansé, ou en polystyrène expansé.

9. Nacelle selon l'une quelconque des revendications 1 à 8, **caractérisée en ce que** ladite enveloppe interne (2) comprend une pluralité de rainures (223) destinées respectivement à recevoir chacune un desdits montants (120) et/ou une traverse (123) de ladite armature (1).

10. Nacelle (N) selon la revendication 9, **caractérisée en ce que** ladite enveloppe interne (2) comprend, entre lesdites rainures (223), des protubérances (224) remplissant chacune une desdites ouvertures (124) de ladite armature (1).

11. Nacelle (N) selon la revendication 10, **caractérisée en ce qu'**elle présente un premier jeu d'installation entre lesdites protubérances (224) et lesdites ouvertures (124) et/ou un deuxième jeu d'installation entre les rainures (223) et les montants (120) et/ou les traverses (122).

12. Nacelle (N) selon l'une des revendications 1 à 11, **caractérisée en ce que** ladite armature porte des moyens de solidarisation permettant de fixer ladite nacelle (N) à une embase montée sur ledit siège d'un véhicule automobile.

13. Nacelle (N) selon l'une des revendications 1 à 12, **caractérisée en ce que** ladite armature (1) porte des pinces de solidarisation permettant de fixer ladite nacelle (N) à des boucles d'accrochage prévues à cet effet sur ledit siège d'un véhicule automobile.

14. Nacelle (N) selon l'une des revendications 1 à 13, **caractérisée en ce que** ladite enveloppe interne (2) s'étend au-dessus du rebord supérieur (125) de l'armature (1).

15. Système pour le transport d'un enfant en position allongée, comprenant une embase solidaire d'un véhicule automobile et une nacelle (N) selon l'une des revendications 1 à 14, destinée à être fixée par des moyens de solidarisation à ladite embase.

## Patentansprüche

1. Kinderbett (N) für den Transport eines Kindes in liegender Position, dazu bestimmt, mit dem Sitz eines Automobilfahrzeuges fest verbunden zu werden, **dadurch gekennzeichnet, dass** das Kinderbett (N) umfasst:
- einen Rahmen (1), der eine Vielzahl von Streben (120) umfasst, die sich von einem Boden (11) aus erstrecken und mit ihrem oberen Ende durch Querstreben (122) verbunden sind, wodurch mehrere Öffnungen (124) begrenzt werden; und
- eine Auskleidung (2), die im Inneren des Rahmens (1) angeordnet ist, die die Innenwände des Kinderbetts (N) bildet und Ausstülpungen aufweist, die mindestens teilweise mindestens eine der Öffnungen (124) des Rahmens (1) ausfüllen.

2. Kinderbett (N) nach Anspruch 1, **dadurch gekennzeichnet, dass** der Rahmen an jeder Seitenfläche eine vertikale Strebe aufweist, einen sogenannten Pfosten, an dessen oberem Ende ein Griff montiert ist.

3. Kinderbett nach Anspruch 2, **dadurch gekennzeichnet, dass** der Pfosten an der Seitenfläche im Wesentlichen in der Höhe platziert ist, wo sich der Kopf des Kindes befindet.

4. Kinderbett nach einem der Ansprüche 2 und 3, **dadurch gekennzeichnet, dass** der Rahmen mindestens eine schräge Strebe in Bezug zur Waagerechten umfasst, einen sogenannten Sparren, dessen oberes Ende an das obere Ende des besagten Pfosten anschließt.

5. Kinderbett nach Anspruch 4, **dadurch gekennzeichnet, dass** mindestens einer der Sparren sich bis zum unteren Teil des Rahmens fortsetzt.

6. Kinderbett nach einem der Ansprüche 1 bis 5, **dadurch gekennzeichnet, dass** die Auskleidung (2) einteilig ist und mindestens einen Montageschlitz (23) in seiner Umfangswand aufweist.

7. Kinderbett nach einem der Ansprüche 1 bis 5, **dadurch gekennzeichnet, dass** die Auskleidung (2) aus zwei verschiedenen Teilen gebildet ist.

8. Kinderbett (N) nach einem der Ansprüche 1 bis 7, **dadurch gekennzeichnet, dass** die Auskleidung (2) aus geschäumtem thermoplastischen Polymer, aus geschäumtem Polypropylen oder aus geschäumtem Polystyren hergestellt ist.

9. Kinderbett nach einem der Ansprüche 1 bis 8, **dadurch gekennzeichnet, dass** die Auskleidung (2) eine Vielzahl von Aussparungen (223) umfasst, die jeweils dazu bestimmt sind, dass jede eine der Streben (120) und/oder eine Querstrebe (123) des Rahmens (1) aufnimmt.

10. Kinderbett (N) nach Anspruch 9, **dadurch gekennzeichnet, dass** die Auskleidung (2) zwischen den Aussparungen (223) Ausstülpungen (224) umfasst, von denen jede eine der Öffnungen (124) des Rahmens (1) ausfüllt.

11. Kinderbett (N) nach Anspruch 10, **dadurch gekennzeichnet, dass** es einen ersten Einbausatz zwischen den Ausstülpungen (224) und den Öffnungen (124) und/oder einen zweiten Einbausatz zwischen den Aussparungen (223) und den Streben (120) und/oder den Querstreben (122) aufweist.

12. Kinderbett (N) nach einem der Ansprüche 1 bis 11, **dadurch gekennzeichnet, dass** der Rahmen Mittel zum festen Verbinden aufweist, die es ermöglichen, das Kinderbett (N) an einer Grundplatte zu befestigen, die auf dem Sitz eines Automobilfahrzeuges montiert ist.

13. Kinderbett (N) nach einem der Ansprüche 1 bis 12, **dadurch gekennzeichnet, dass** der Rahmen (1) Klemmen zum festen Verbinden aufweist, die es ermöglichen, das Kinderbett (N) an Einhängeschlaufen zu befestigen, die zu diesem Zweck an dem Sitz eines Automobilfahrzeuges vorgesehen sind.

14. Kinderbett (N) nach einem der Ansprüche 1 bis 13, **dadurch gekennzeichnet, dass** sich die Auskleidung (2) über den oberen Rand (125) des Rahmens (1) erstreckt.

15. Vorrichtung für den Transport eines Kindes in liegender Position, umfassend eine mit einem Automobilfahrzeug fest verbundene Grundplatte und ein Kinderbett (N) nach einem der Ansprüche 1 bis 14, das dazu bestimmt ist, mit Mitteln zum festen Verbinden an der Grundplatte befestigt zu werden.

## Claims

1. Cradle (N) for transporting a recumbent child, intended to be attached to a seat of a motor vehicle,
**characterised in that** said cradle (N) comprises:
- a frame (1) comprising a plurality of uprights (120) extending from a base (11) and linked at the top end of same by cross members (122), thus delimiting a plurality of openings (124); and
- an inner casing (2) arranged inside said frame (1), forming the inner walls of said cradle (N) and having protuberances that fill at least partially at least one of said openings (124) of said frame (1).

2. Cradle (N) according to claim 1, **characterised in that** said frame has, on each lateral surface, a vertical upright, referred to as a branch, at the top end of which is mounted a handle.

3. Cradle according to claim 2, **characterised in that** said branch is placed on the lateral surface substantially at the level where the head of the child is located.

4. Cradle according to any of claims 2 and 3, **characterised in that** said frame comprises at least one upright that is inclined with respect to the horizontal, referred to as a truss frame, of which the top end joins the top end of said branch.

5. Cradle according to claim 4, **characterised in that** at least one of said truss frames is extended to the lower portion of said frame.

6. Cradle according to any of claims 1 to 5, **characterised in that** said inner casing (2) is one-piece and has at least one installation slot (23) in the peripheral wall of same.

7. Cradle according to any of claims 1 to 5, **characterised in that** said inner casing (2) is formed from two separate blocks.

8. Cradle (N) according to claim 1 to 7, **characterised in that** said inner casing (2) is manufactured from expanded thermoplastic polymer, from expanded polypropylene, or from expanded polystyrene.

9. Cradle according to any of claims 1 to 8, **characterised in that** said inner casing (2) comprises a plurality of grooves (223) intended respectively to each receive one of said uprights (120) and/or a cross member (123) of said frame (1).

10. Cradle (N) according to claim 9, **characterised in that** said inner casing (2) comprises, between said grooves (223), protuberances (224) that each fill one of said openings (124) of said frame (1).

11. Cradle (N) according to claim 10, **characterised in that** it has a first installation clearance between said protuberances (224) and said openings (124) and/or a second installation clearance between the grooves (223) and the uprights (120) and/or the cross members (122).

12. Cradle (N) according to one of claims 1 to 11, **characterised in that** said frame carries means for attaching making it possible to attach said cradle (N) to a base mounted on said seat of a motor vehicle.

13. Cradle (N) according to one of claims 1 to 12, **characterised in that** said frame (1) carries attaching clamps making it possible to attach said cradle (N) to fastening loops provided for this purpose on said seat of a motor vehicle.

14. Cradle (N) according to one of claims 1 to 13, **characterised in that** said inner casing (2) extends above the top edge (125) of the frame (1).

15. System for transporting a recumbent child, comprising a base integral with a motor vehicle and a cradle (N) according to one of claims 1 to 14, intended to be fastened by means for attaching to said base.
